# EUROPÄISCHE PATENTSCHRIFT

(11) **EP 0 367 755 B1**
(45) Veröffentlichungstag und Bekanntmachung des Hinweises auf die Patenterteilung: **04.08.1993**
(21) Anmeldenummer: 89890286.1
(22) Anmeldetag: 31.10.1989
(51) Int. Cl.: B65G 17/42, B65G 19/24

(54) **Mitnehmeranordnung**
Drag arrangement
Dispositif d'entraînement

(30) Priorität: 02.11.1988 AT 2693/88
(43) Veröffentlichungstag der Anmeldung: 09.05.1990
(73) Patentinhaber: Steirische Kettenfabriken Pengg-Walenta KG, A-8021 Graz (AT)
(72) Erfinder: Rosegger, Josef, A-8621 Thörl (AT)
(74) Vertreter: Matschnig, Franz, Dipl.-Ing.

(56) Entgegenhaltungen:
- AT-B- 262 880
- DE-A- 1 815 839
- DE-A- 2 119 499
- DE-A- 2 924 721
- DE-A- 3 224 592
- DE-B- 2 160 027
- FR-A- 1 176 685

## Beschreibung

Die Erfindung bezieht sich auf eine Mitnehmeranordnungen gemäß dem Oberbegriff des Anspruchs 1 zum Befestigen eines Bauteils, z.B. eines Kratzers, eines Bechers oder einer Tragrolle an einer Rundstahlkette, bei welcher ein Mitnehmer aus zwei Klemmteilen besteht, die beiderseits der Hauptebene eines Kettengliedes angeordnet, mittels einer senkrecht zu dieser Ebene durch die Gliedöffnung verlaufenden Schraubverbindung verbunden sind und die je zwei Seitenstege aufweisen, welche die Längsschenkel des Gliedes in ihrer Längsrichtung gesehen zumindest über einen Teil ihres Umfanges umfassen, jeder Klemmteil einen Mittensteg aufweist, durch den eine Bohrung für die Schraubverbindung verläuft, zumindest ein Klemmteil an einem Seitensteg mit einem Anschlußmittel für den Bauteil versehen ist, das senkrecht zu der Gliedhauptebene gesehen, außerhalb der äußeren Breite des Kettengliedes liegt und bezüglich der Gliedmittenebene versetzt angeordnet ist und jener Schenkel eines Kettengliedes, der dem Anschlußmittel näher liegt, ist in seiner Längsrichtung gesehen, von zwei Seitenstegen der beiden Klemmteile eines Mitnehmers zusammen im wesentlichen über seinen ganzen Umfang umfaßt.

Bei Fördereinrichtungen mit umlaufenden Rundstahlketten müssen Kratzer, Bleche, Förderbecher oder Tragrollen an den Rundstahlketten befestigt werden. Hiebei können bei zwei in Abstand voneinander verlaufenden Rundstahlketten Kratzer, Becher oder Tragrollen zwischen den Ketten liegen. Bei Einkettenförderern sind die Bauteile meist symmetrisch zur Kettenachse angeordnet. Zur Befestigung der Bauteile an den Ketten bzw. an der Kette sind verschiedene Maßnahmen bekannt geworden.

So ist es bekannt, an Förderbechern Laschen mit Bohrungen vorzusehen und Steckbolzen einerseits durch diese Laschen und andererseits durch Öffnungen in Gliedern der Kette zu stecken. Diese Befestigungsart erfordert viele Einzelteile und ist außerdem immer nur für einen speziellen Bauteil geeignet. Eine andere steckbolzenartige Befestigung für Kratzer geht aus der DE-C-33 02 755 hervor. Es ist auch bekannt, Kettenbügel zu verwenden (vergl. DIN 745), welche die Form eines offenen Gliedes aufweisen und mit Schraubbolzen oder Laschen versehen sind. Die beiden Schraubbolzen werden durch entsprechende, an dem Bauteil vorgesehene Bohrungen gesteckt und sodann angeschraubt. Diese Befestigungsart ist insoferne nachteilig, als die Kettenbügel an Stelle eines Gliedes in die Kette eingehängt werden müssen, die daher an den entsprechenden Stellen vorerst geöffnet werden muß. Naturgemäß stellen diese Kettenbügel auch eine Schwachstelle in der Kette dar, da sie nicht geschlossen sind und die gesamte Kettenzugkraft aufnehmen müssen.

Es ist auch bekannt (AT-PS 262 880), an Gliedern der Kette Schraubbolzen aufzuschweißen, die sodann zur Befestigung des Bauteils herangezogen werden. Naturgemäß ist diese Befestigungsart wegen der erforderlichen Schweißarbeiten umständlich und auch hier muß die Kette geöffnet werden, wenn beispielsweise ein Schraubbolzen abbricht oder sonst einen Defekt aufweist.

Eine damit vergleichbare Bauart zeigt die DE-OS 32 24 592, bei welcher Mitnehmerlaschen unmittelbar an ein Kettenglied angeschweißt sind.

Eine andere Mitnehmeranordnung ist in der FR-A 1 176 685 geoffenbart. Hier liegen zwei Mitnehmerteile an den Längsschenkeln des Befestigungsgliedes in Kettenlängsrichtung gesehen nebeneinander und eine Schraubverbindung der Mitnehmerteile verläuft in Kettenlängsrichtung. Aus diesem Grunde können zwar die Mitnehmerteile gegeneinander, jedoch niemals gegen das Kettenglied geklemmt werden. Davon abgesehen sind die verwendeten Mitnehmerteile komplizierte Gesenkschmiedeteile, die in der Herstellung teuer sind und weiters nur zur Befestigung von Kratzern, nicht jedoch von Bechern etc. verwendbar sind.

Die DE-C-29 24 721 beschreibt eine Anordnung zum Befestigen eines Bauteiles an einer Rundstahlkette, bei welcher zwei Klemmbacken vorgesehen sind, die mit Rampen an den Gliedschenkeln angreifen. Ein besonderes Zentrierorgan, das zwischen den Klemmteilen liegt, soll ein Verdrehen gegenüber der Kette verhindern. Der zu befestigende Bauteil muß mittels der durch die Gliedöffnung verlaufenden Schraubverbindung mitverschraubt werden.

Schließlich sind auch Mitnehmer bekannt geworden, die der eingangs erwähnten Bauart entsprechen. So beschreibt die DE-A- 2 119 499 einen Mitnehmer, bei dem beide von einem Schraubbolzen durchsetzte Klemmteile zusammen die Längsschenkel des Gliedes voll umgreifen. Ein Klemmteil weist zwei in Abstand voneinander liegende Befestigungslaschen für einen Kratzer auf. Diese Ausführung ist einerseits für die Befestigung anderer Bauteile, wie z.B. Becher, nicht geeignet und kann andererseits keineswegs sowohl an stehenden als auch an liegenden Kettengliedern verwendet werden. Die Möglichkeit, zwei idente Klemmteile zu verwenden, ist hier gleichfalls nicht gegeben. Weiters führen die üblichen Fertigungstoleranzen der Kettenglieder dazu, daß beim Zusammenschrauben des Mitnehmers in einem Glied mit zu großer oder zu kleiner Breite Spannungen auftreten, die zu einem Bruch des Gliedes führen können.

Aufgabe der Erfindung ist die Schaffung einer Mitnehmeranordnung, die aus möglichst wenig Teilen besteht und einfach aufgebaut, jedoch universell verwendbar ist, d.h. für eine Vielzahl von Bauteilen und Förderanlagentypen in Frage kommt, gleichgültig ob diese Bauteile an stehenden oder liegenden Gliedern der Rundstahlkette zu befestigen sind wobei ungeachtet größerer Toleranzen in der Gliedbreite an dem Befestigungsglied keine zusätzlichen Spannungen auftreten sollen.

Diese Aufgabe wird mit einer Mitnehmeranordnung der eingangs erwähnten Art gelöst, bei welcher erfindungsgemäß das zumindest eine Anschlußmittel symmetrisch zur Gliedhauptebene liegt und diese enthält und der andere Schenkel von den beiden anderen Seitenstegen um maximal 180° umfaßt ist.

Die Mitnehmeranordnung nach der Erfindung kann bei einfachem Aufbau für eine Vielzahl von Bauteilen verwendet werden, wobei es in den meisten Fällen auch möglich ist, beide Klemmteile vollkommen gleich auszugestalten, wodurch der Herstellungsaufwand weiter vermindert wird. Die Festigkeit der Kette wird durch die Mitnehmeranordnung nicht beeinträchtigt und ein Schaden an-einem Mitnehmer führt nicht notwendigerweise zu einem Stillstand der Förderanlagen.

Weitere Ausgestaltungen der Erfindung sind den Unteransprüchen zu entnehmen.

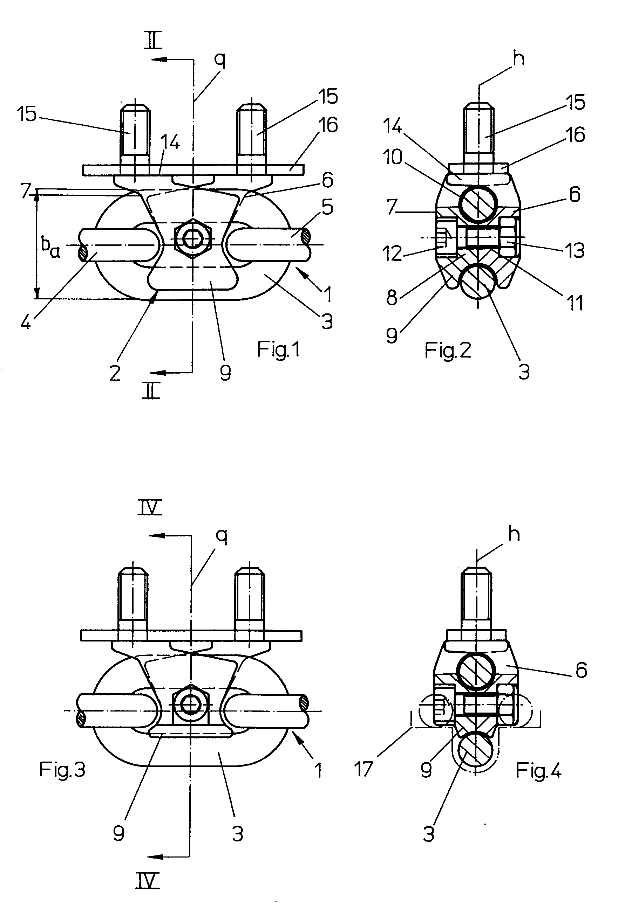

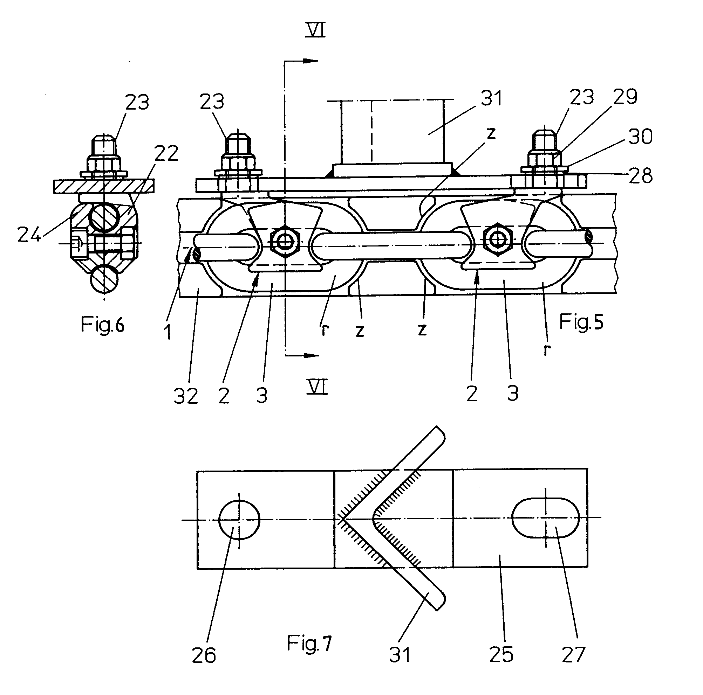

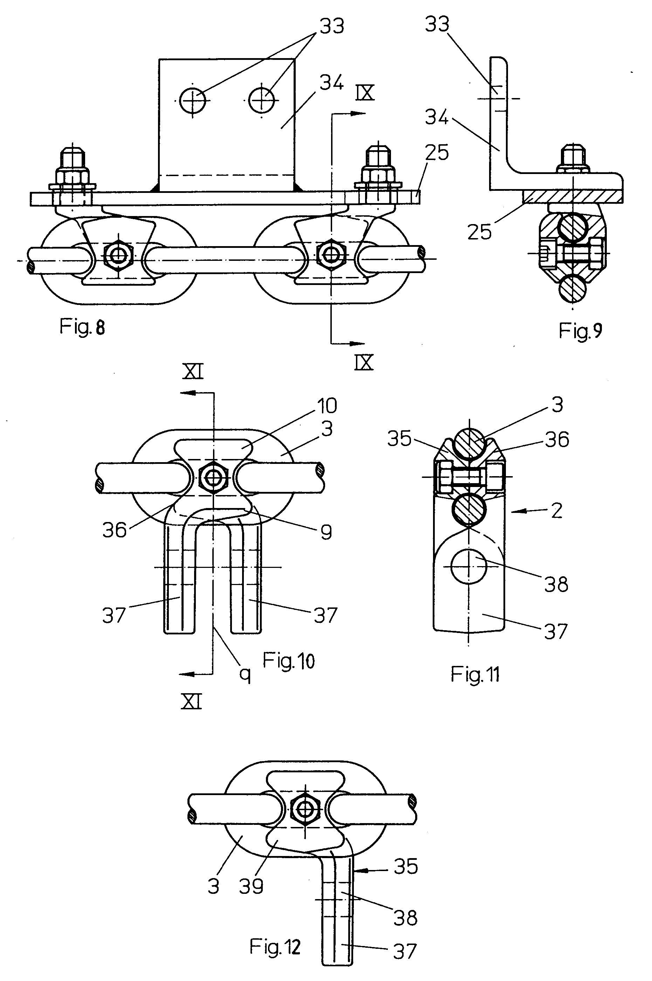

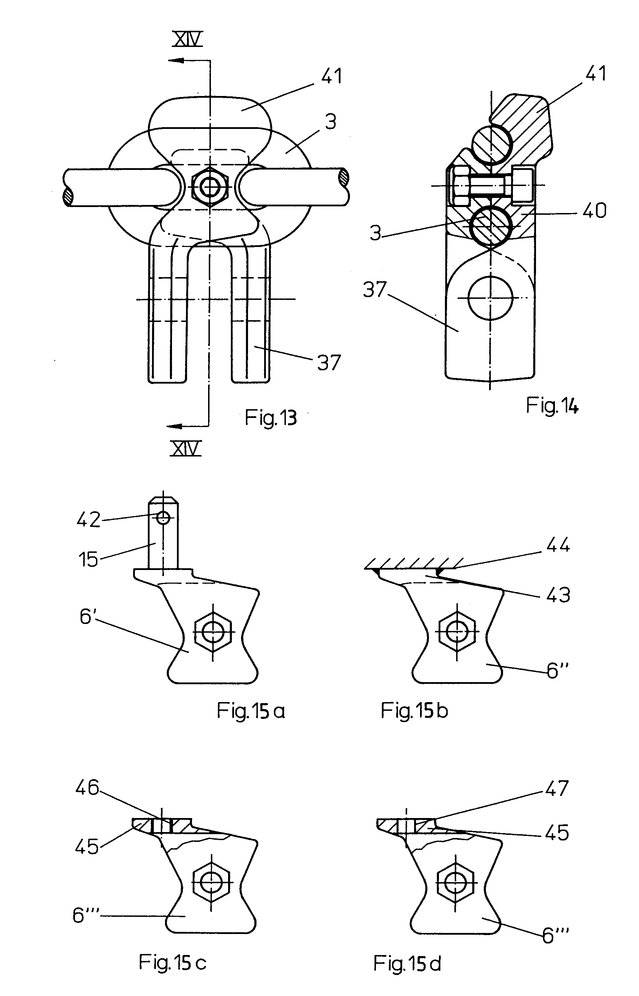

Die Erfindung samt ihren weiteren Merkmalen ist im folgenden an Hand von Ausführungsbeispielen näher erläutert, die in der Zeichnung veranschaulicht sind. In dieser zeigen Fig. 1 eine Seitenansicht eines Mitnehmers, der an einem Kettenglied einer Rundstahlkette angeordnet ist, Fig. 2 einen Schnitt nach der Linie II-II der Fig. 1, Fig. 3 und 4 eine zweite Ausführungsform der Erfindung in Ansichten wie Fig. 1 und 2, Fig. 5 eine Draufsicht auf eine dritte Ausführungsform, Fig. 6 einen Schnitt nach der Linie VI-VI der Fig. 5, Fig. 7 eine Seitenansicht auf die Ausführung nach Fig. 5, Fig. 8 und Fig. 9 in Ansichten entsprechend Fig. 5 und 6 eine vierte Ausführungsform der Erfindung, Fig. 10 eine Draufsicht auf eine fünfte Ausführungsform der Erfindung, Fig. 11 einen Schnitt nach der Linie XI-XI der Fig. 10, Fig. 12 in einer Ansicht entsprechend Fig. 10 eine sechste Ausführungsform der Erfindung, Fig. 13 eine Draufsicht auf eine siebente Ausführungsform der Erfindung, Fig. 14 einen Schnitt nach der Linie XIV-XIV der Fig. 13 und Fig. 15a bis d weitere Varianten der Anschlußmittel der Klemmteile.

In Fig. 1 ist ein Abschnitt einer Rundstahlkette 1 eines nicht weiter gezeigten Kettenförderers gezeigt, der z.B. ein Kratzketten- oder ein Becherförderer sein kann. Meist sind zwei parallel in Abstand voneinander umlaufende Förderketten vorgesehen, an welchen Bauteile, wie Kratzer oder Förderbecher befestigt sind. Im vorliegenden Fall ist ein Mitnehmer 2 an einem Kettenglied 3 angebracht, wobei es sich je nach Art des Förderers um ein stehendes oder liegendes Kettenglied handelt. Die Begriffe "stehend" oder "liegend" beziehen sich hiebei auf die Förderebene des Kettenförderers. An das Kettenglied 3 schließen zu beiden Seiten Nachbarglieder 4, 5 an.

Der Mitnehmer 2 besteht aus zwei Klemmteilen 6, 7. Wie auch unter Bezugnahme auf Fig. 2 ersichtlich, sind bei diesem ersten Ausführungsbeispiel die beiden Klemmteile 6, 7 völlig gleichgestaltet, wobei es sich vorzugsweise um gesenkgeschmiedete und vergütete Teile handelt. Jeder Mitnehmer 6, 7 besitzt einen Mittensteg 8, einen - in der Zeichnung unteren - Seitensteg 9 und einen - in der Zeichnung oberen - Seitensteg 10. Weiters ist in dem Mittensteg 8 eine Bohrung 11 ausgebildet. Die beiden Klemmteile 6, 7 können so wie in Fig. 1 und 2 gezeigt, derart an das Kettenglied 3 gelegt werden, daß die Stirnflächen der Mittenstege 8 einander zugewandt sind. Mittels eines Schraubbolzens 12, der durch die Bohrungen 11 gesteckt wird und einer Mutter 13 können sodann die Klemmteile 6, 7 gegeneinander gezogen werden. Sowohl der Kopf des Schraubbolzens 12 der als Innensechskantschraube ausgebildet ist, als auch die selbstsichernde Mutter 13 sind in Vertiefungen an den Außenflächen der Klemmteile 6, 7 versenkt.

Wie aus Fig. 1 ersichtlich, ist die Breite bzw. Form der Klemmteile 6, 7 im Bereich ihres Mittensteges 8 so gewählt, daß die Nachbarglieder 4, 5 frei bezüglich des Gliedes 3 verschwenkbar sind, jedenfalls um einen Winkel, der ein Umlaufen der Kette 1 über Antriebs- und/oder Umlenkräder ermöglicht.

Der Schraubbolzen 12 verläuft senkrecht zur Hauptebene h des Kettengliedes 3 durch dessen Öffnung, wobei seine Achse im wesentlichen mit der Quermittenebene q des Gliedes 3 zusammenfällt. Bezüglich dieser Quermittenebene sind die Klemmteile 6, 7 im Bereich ihres Mittensteges 8 und ihres unteren Seitensteges 9 symmetrisch ausgebildet. Der obere Seitensteg 10 ist in seinem Endbereich gegen die Ebene q versetzt und mit einem Flanschabschnitt 14 versehen, der eine äußere, ebene Auflagefläche besitzt, von welcher ein Anschlußbolzen 15 absteht. Dadurch weist die Mitnehmeranordnung bei zusammengeschraubten Klemmteilen 6, 7 zwei in Abstand voneinander liegende Anschlußbolzen 19 auf, die mit Gewinden versehen sein und beispielsweise durch Bohrungen in der Seitenwand oder der Rückwand eines Förderbechers gesteckt und mit einer Mutter und Sicherungsmitteln versehen werden können. Zusätzlich kann zwischen zu befestigendem Bauteil und den Flanschabschnitten 14 des Mitnehmers 2 eine Platte 16 gelegen sein, die mit zwei in Abstand voneinander liegenden, nicht näher gezeigten Bohrungen für die Bolzen 12 versehen ist. Eine solche Platte 16 kann auch als Abstandslehre beim Zusammenschrauben der Klemmteile 5, 6 nützlich sein und erhöht die Festigkeit der Mitnehmeranordnung.

Wie insbesondere aus Fig. 2 hervorgeht, wird bei an dem Kettenglied 3 angeordneten Mitnehmer 2 ein Schenkel des Gliedes 3, in der Zeichnung der untere, von den einen, unteren Seitenstegen 9 der Klemmteile über insgesamt etwa 180° umfaßt, wogegen die anderen, hier oberen Seitenstege 10 den anderen Schenkel des Gliedes 3 - in seiner Längsrichtung gesehen - zusammen um insgesamt 360°, d. h. über den gesamten Umfang umfassen. Da außerdem die Innenflächen der Seitenstege 8, 10 eine dem Kreisquerschnitt der Gliedschenkel entsprechende Wölbung aufweisen, ergibt sich eine besonders gute Abstützung des Mitnehmers 2 an dem Kettenglied 3.

Wenn die eben beschriebene erste Ausführungsform im Zusammenhang mit Bechern verwendet wird, werden bei Befestigung an der Becherrückwand die Mitnehmer 2 an stehenden Kettengliedern angeordnet und es werden innenverzahnte Kettenräder für die Rundstahlkette 1 vorgesehen. Bei Befestigung an der Becherseitenwand sind die Mitnehmer 2 hingegen an liegenden Kettengliedern angeordnet und als Antriebsund Umlenkräder für die Kette 1 dienen beispielsweise Sternkettenräder.

Die zweite, in den Fig. 3 und 4 dargestellte Ausführungsform unterscheidet sich von jener nach Fig. 1 und 2 lediglich dadurch, daß die einen, hier unteren Seitenstege 9 kürzer ausgebildet sind und den ihnen zugeordneten Schenkel des Kettengliedes 3 zusammen bloß über etwa 90° umfassen. Diese Ausbildung ermöglicht es, daß die Kette 1 samt den Mitnehmern 2 über Kettenräder mit Rillen laufen kann. In Fig. 4 ist ein Teil des Profils 17 eines derartigen Kettenrades strichpunktiert angedeutet.

In den Fig. 5 bis 7 ist eine dritte Ausführungsform einer Mitnehmeranordnung dargestellt, bei welcher zwei Mitnehmer 2 an zwei gleichorientierten Kettengliedern 3 angeordnet sind, die in Abstand voneinander liegen. Jeder der Mitnehmer 2 besteht aus einem Klemmteil 22, der so ausgebildet ist, wie einer der Klemmteile 6 oder 7 nach Fig. 4, d.h. jeder Klemmteil 22 besitzt einen Flanschabschnitt 14 mit einem Anschlußbolzen 23. Der andere Klemmteil 24 hingegen ist mit gleichen oberen und unteren Seitenstegen ohne Anschlußmittel ausgebildet.

Wegen der Anordnung der Mitnehmer 2 an je einem Kettenglied 3, hier an liegenden Gliedern, ergibt sich ein größerer Abstand der Anschlußbolzen 23. Mit Hilfe der Anschlußbolzen 23 ist an die Klemmteile 22 eine Anschlußplatte 25 geschraubt, wobei ein Anschlußbolzen 23 durch ein Rundloch 26 und ein Anschlußbolzen 23 durch ein Langloch 27 (siehe Fig. 7) geführt st. Außerdem ist jeder Anschlußbolzen 23 mit einer Distanzhülse 28 versehen, deren Länge größer als die Dicke der Anschlußplatte 25 ist. Mittels einer Mutter 29 und einer Beilagscheibe 30, die an dem oberen Ende der Distanzhülse 28 anliegt, erfolgt die Befestigung der Anschlußplatte 25 an den Mitnehmern 2 so, daß eine gewisse freie Beweglichkeit der Anschlußplatte 25 bezüglich der Mitnehmer 2 gegeben ist. Im vorliegenden Beispiel ist an die Anschlußplatte 25 ein Ende eines Winkelkratzers 31 angeschweißt. Die eben beschriebene Mitnehmeranordnung ist besonders für Kratzkettenförderer geeignet. Sie bietet auch den Vorteil, daß die Anschlußplatte 25 von der Kette 1 einfach dadurch abgenommen werden kann, daß man die Muttern 29 etwas lockert und dann die Bolzen-Mutter-Verbindung 12, 13 der Mitnehmer 2 öffnet.

Die Lage der Kettenglieder 3 beim Umlauf um ein Kettenrad geht aus Fig. 5 hervor, in welcher ein Teil eines Kettenrades 32 eingezeichnet ist. Demgenmäß ist es bei Verwendung der erfindungsgemäßen Mitnehmeranordnung an horizontalen Kettengliedern, bezogen auf den Umlauf um Kettenräder mit außen angreifenden Zähnen z (Taschen) erforderlich, daß die beiden äußeren Gliedrundungen r entsprechend der außen angreifenden Zähne z freigestellt sind, was durch entsprechende Ausbildung der Klemmteile und Anschlußmittel erfolgen kann.

Die vierte, in Fig. 8 und 9 dargestellte Ausführung einer Mitnehmeranordnung entspricht völlig jener nach den Fig. 5 bis 7, jedoch ist hier an Stelle eines Winkelkratzers ein mit Bohrungen 33 versehener Befestigungswinkel 34 an die Anschlußplatte 25 angeschweißt. Diese Ausführungsform eignet sich für eine seitliche Befestigung von Bechern oder Kratzern.

Bei der fünften Ausführungsform der Erfindung gemäß den Fig. 10 und 11 sind die Klemmteile 35, 36 der Mitnehmer 2 wieder völlig gleich ausgebildet. Der in der Zeichnung obere Seitensteg 10 jedes Klemmteils 35, 36 ist so ausgebildet, wie die in Fig. 1 und 2 unteren Seitenstege, wodurch der eine Schenkel des Kettengliedes 3 über einen Winkel von annähernd 180° von den Klemmstücken 35, 36 umfaßt ist.

Die in Fig. 10 und 11 unteren Stege 9 sind jedoch in flacheisenartige Anschlußlaschen 37 fortgesetzt, in welchen Bohrungen 38 ausgebildet sind. Wie aus der Zeichnung ersichtlich, verlaufen die Anschlußlaschen 37 zu beiden Seiten der Quermittenebene q des Gliedes 3 in Abstand von dieser und die Bohrungen 38 parallel zur Hauptachse des Kettengliedes 3. Die Seitenstege 9 umfassen den in der Zeichnung unteren Gliedschenkel zusammen und in seiner Längsrichtung gesehen um praktisch 360°, sodaß auch hier eine gute Abstützung des Mitnehmers 2 an dem Kettenglied 3 gegeben ist. Diese Ausführungsform ist besonders zur Befestigung von Kratzern in Bergbaubetrieben geeignet. Die Kratzer werden mit ihren Enden zwischen die Anschlußlaschen 37 geschoben und dann mittels einer Schraubverbindung angeschlossen, die durch die Bohrungen 38 der Anschlußlaschen und entsprechende Bohrungen in den Kratzern verlaufen.

Wie die in Fig. 12 dargestellte sechste Ausführungsform der Mitnehmeranordnung zeigt, kann auch bloß ein Klemmteil 35 mit einer Anschlußlasche 37 versehen sein, wobei der andere Klemmteil 39 beispielsweise so ausgebildet ist, wie der Klemmteil 24 links in Fig. 6.

Die siebente Ausführungsform nach Fig. 13 und 14 entspricht jener nach Fig. 10 und 11, jedoch ist ein Klemmteil 40 an seiner der Anschlußlasche 37 gegenüberliegenden Seite in ein an sich bekanntes Verschleißstück 41 fortgesetzt, das in einer entsprechenden Führung des Kettenförderers gleitet und eine Abstützung der Förderelemente ermöglicht.

Aus der vorgehenden Beschreibung geht hervor, daß die Erfindung eine Vielzahl von Mitnehmeranordnungen schafft, die mit wenigen Einzelteilen zusammenzustellen sind. Verschiedene der beispielsweise gezeigten Klemmteile können miteinander kombiniert werden.

Die beschriebenen Anschlußmittel, wie z.B. Anschlußbolzen 15 und Anschlußlaschen 37, sind als Beispiele beschrieben und es gibt noch eine Vielzahl anderer, je nach Art und Anzahl der anzuschließenden Bauteile ausgebildete Anschlußmittel , was zum Teil in Fig. 15a bis d dargestellt ist. So zeigt Fig. 15a einen Klemmteil 6' eines Mitnehmers, der einem Klemmteil 7 bzw. 6 nach Fig. 1, 2 entspricht, doch ist hier der Anschlußbolzen 15 ohne Gewinde ausgebildet, hingegen mit einer Querbohrung 42 für einen Splint oder ein anderes Sicherungsmittel versehen. Fig. 15b zeigt einen ähnlichen Klemmteil 6'', der jedoch bloß einen Anschweißflansch 43 und keinen Anschlußbolzen trägt. Mittels des Flansches 43 kann der Klemmteil an einen Bauteil 44 eines Kettenförderers angeschweißt werden. In Fig. 15c ist gezeigt, daß ein Klemmteil 6‴ an einer Seite auch in einen Anschlußflansch 45 verlängert sein kann, in dem eine Gewindebohrung 46 ausgebildet ist, deren Achse parallel zur Nebenachse eines Gliedes verläuft, auf dem der Mitnehmer angeordnet ist. Auf diese Weise können z.B. Becher oder Kratzer mit Hilfe von Schraubbolzen auf einfache Weise an den Mitnehmern befestigt werden. Alternativ kann gemäß Fig. 15d der Anschlußflansch 45 auch mit einer glatten Durchgangsbohrung 47 versehen sein, die, zusammen mit Schraub- oder Steckbolzen, Muttern, Splinten etc. zum Anschluß eines Bauteils dient.

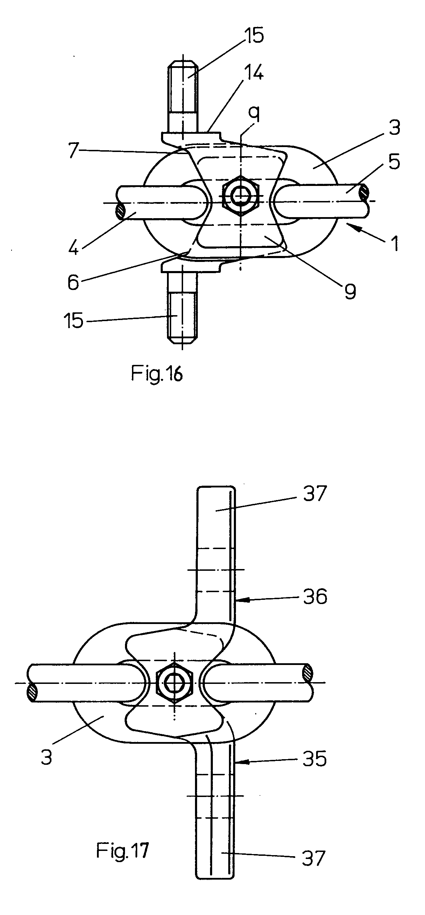

Den Fig. 16 und 17 sind Mitnehmeranordnungen nach der Erfindung zu entnehmen, die besonders bei Einkettenförderern (Mittelkettenförderern) mit Vorteil angewendet werden können. Hiezu werden gemäß Fig. 16 die gleichen Klemmteile 6, 7, wie sie bei der Ausführung nach Fig. 1 und 2 vorgesehen sind, herangezogen, jedoch ist ein Klemmteil bezüglich des anderen um 180° verdreht, sodaß sich von jeder Seite der Kette 1 ein Anschlußbolzen 15 weg erstreckt. An die Bolzen 15 können mit Hilfe von Muttern Bleche, z.B. Kratzerbleche, oder Laschen anderer Förderbauteile geschraubt werden. Völlig analog ist die Mitnehmeranordnung nach Fig. 17 aufgebaut, bloß werden hier Klemmteile 35, 36, wie sie auch in Fig. 10 und 11 gezeigt sind, verwendet, wieder um 180° gegeneinander verdreht. Auch an den beidseits von der Kette abstehenden Anschlußlaschen 37 können z.B. Kratzer befestigt werden.

## Patentansprüche

1. Mitnehmeranordnung zum Befestigen eines Bauteils, z.B. eines Kratzers, eines Bechers oder einer Tragrolle an einer Rundstahlkette (1), bei welcher ein Mitnehmer aus zwei Klemmteilen (6, 7) besteht, die beiderseits der Hauptebene eines Kettengliedes (3) angeordnet, mittels einer senkrecht zu dieser Ebene durch die Gliedöffnung verlaufenden Schraubverbindung (12, 13) verbunden sind und die je zwei Seitenstege (9, 10) aufweisen, welche die Längsschenkel des Gliedes (3) in ihrer Längsrichtung gesehen zumindest über einen Teil ihres Umfanges umfassen, jeder Klemmteil (6, 7, 22, 24; 35, 36; 39, 40) einen Mittensteg (8) aufweist, durch den eine Bohrung (11) für die Schraubverbindung (12, 13) verläuft, zumindest ein Klemmteil (6, 7; 22, 24; 35, 36; 39, 40) an einem Seitensteg (10) mit einem Anschlußmittel (15, 23, 25, 37, 43, 45) für den Bauteil versehen ist, das senkrecht zu der Gliedhauptebene (h) gesehen, außerhalb der äußeren Breite (bₐ) des Kettengliedes (3) liegt und bezüglich der Gliedmittenebene (q) versetzt angeordnet ist und jener Schenkel eines Kettengliedes (3), der dem Anschlußmittel näher liegt, ist in seiner Längsrichtung gesehen, von zwei Seitenstegen (10, 10) der beiden Klemmteile (6, 7; 22, 24; 35, 36) eines Mitnehmers (2) zusammen im wesentlichen über seinen ganzen Umfang umfaßt, dadurch gekennzeichnet, daß das zumindest eine Anschlußmittel (15, 23, 25, 37, 43, 45) symmetrisch zur Gliedhauptebene (h) liegt und diese enthält und der andere Schenkel von den beiden anderen Seitenstegen (9, 9) um maximal 180° umfaßt ist.

2. Mitnehmeranordnung nach Anspruch 1, dadurch gekennzeichnet, daß je Bauteil und Kette (1) zwei Mitnehmer (2) vorgesehen sind (Fig. 5, 8).

3. Mitnehmeranordnung nach Anspruch 2, dadurch gekennzeichnet, daß je ein Klemmteil (22;35) jedes Mitnehmers (2) Anschlußmittel (23;37) aufweist (Fig. 5, 8).

4. Mitnehmeranordnung nach Anspruch 1 oder 2, dadurch gekennzeichnet, daß die beiden Klemmteile (6,7; 35,36) jedes Mitnehmers (2) vollkommen gleich ausgebildet sind (Fig. 1 bis 4, 10, 11).

5. Mitnehmeranordnung nach Anspruch 4, dadurch gekennzeichnet, daß jeder Klemmteil (6,7; 35,36) eines Mitnehmers (2) gleich ausgebildete Anschlußmittel (15,37) aufweist (Fig. 1 bis 4, 10, 11).

6. Mitnehmeranordnung nach einem der Ansprüche 1 bis 5, dadurch gekennzeichnet, daß zumindest einer der Klemmteile (6,7,22) eines Mitnehmers (2) mit einem Anschlußbolzen (15,23) versehen ist, dessen Achse parallel zur Gliedhauptebene (h), vorzugsweise in dieser, und senkrecht zur Hauptachse des Kettengliedes (3) verläuft.

7. Mitnehmeranordnung nach Anspruch 6, dadurch gekennzeichnet, daß der Anschlußbolzen (15) ein Gewindebolzen ist.

8. Mitnehmeranordnung nach Anspruch 6 , dadurch gekennzeichnet, daß der Anschlußbolzen (15) ein glatter Bolzen ist, der im Bereich seines freien Endes mit einer Querbohrung (42) zur Aufnahme eines Splints, Sicherungsbolzens od.dgl. versehen ist (Fig. 15a).

9. Mitnehmeranordnung nach einem der Ansprüche 1 bis 5, dadurch gekennzeichnet, daß von zumindest einem Klemmteil (35, 36) eines Mitnehmers (2) eine flacheisenartige Anschlußlasche (37) parallel zur Quermittelebene (q) des Gliedes (3) absteht, die mit einer parallel zur Gliedhauptachse verlaufenden Bohrung (38) versehen ist (Fig. 10 bis 12).

10. Mitnehmeranordnung nach Anspruch 9, dadurch gekennzeichnet, daß von jedem der beiden Klemmteile (35, 36) eines Mitnehmers (2) eine Anschlußlasche (37) absteht, wobei beide Laschen (37) in Abstand voneinander, symmetrisch zur Gliedmittenebene (q) gelegen sind und ihre Bohrungen (38) miteinander fluchten (Fig. 10, 11).

11. Mitnehmeranordnung nach einem der Ansprüche 1 bis 10, dadurch gekennzeichnet, daß einer der Klemmteile (40) eines Mitnehmers (2) in ein an sich bekanntes Verschleißstück (41) hinaus verlängert ist, das an einer Führung zur Anlage kommt (Fig. 13, 14).

12. Mitnehmeranordnung nach einem der Ansprüche 1 bis 5 oder 11, dadurch gekennzeichnet, daß zumindest einer der Klemmteile (6‴) eines Mitnehmers mit einem Anschlußflansch (45) versehen ist, in dem eine parallel zur Nebenachse des Kettengliedes verlaufende Anschlußbohrung ausgebildet ist (Fig. 15c, d).

13. Mitnehmeranordnung nach Anspruch 12, dadurch gekennzeichnet, daß die Anschlußbohrung eine Gewindebohrung ist (Fig. 15c).

14. Mitnehmeranordnung nach einem der Ansprüche 2, 3, 6 oder 7, dadurch gekennzeichnet, daß je ein Klemmteil (22, 24) jedes Mitnehmers (2) einen Anschlußbolzen (23) aufweist, den beiden Mitnehmern (2) eine senkrecht zur Hauptebene (h) der mit den Klemmteilen versehenen Glieder (3) stehende Anschlußplatte (25) zugeordnet ist und die Anschlußplatte den Anschlußbolzen (23) zugeordnete Bohrungen (26, 27) aufweist (Fig. 5 bis 9).

15. Mitnehmeranordnung nach Anspruch 14, dadurch gekennzeichnet, daß eine der Bohrungen als sich in Richtung der Kettenachse erstreckendes Langloch (27) ausgebildet ist (Fig. 7).

16. Mitnehmeranordnung nach Anspruch 14 oder 15, dadurch gekennzeichnet, daß jeder Anschlußbolzen (23) mit einer Distanzhülse (28), deren Länge größer als die Dicke der Anschlußplatte ist, und mit einer mittels einer Mutter (29) gegen die Distanzhülse (28) in Anlage gebrachten Beilagscheibe (30) versehen ist (Fig. 5 bis 7).

17. Mitnehmeranordnung nach einem der Ansprüche 1 bis 16, dadurch gekennzeichnet, daß die Schraubverbindung der Klemmteile einen Schraubbolzen (12) und eine Mutter (13) aufweist, wobei sowohl der Bolzenkopf als auch die Mutter (13) in den entsprechenden Klemmteilen (6, 7) versenkt sind.

18. Mitnehmeranordnung nach Anspruch 7, dadurch gekennzeichnet, daß der Schraubbolzen (12) eine Innensechskantschraube ist.

19. Mitnehmeranordnung nach Anspruch 17 , dadurch gekennzeichnet, daß die Mutter selbstsichernd ist.

## Claims

1. A carrier arrangement for securing a component, e.g. a dredging shovel, a bucket or a support roller, to a round steel chain (1), wherein a carrier consists of two clamping parts (6, 7) which are disposed on both sides of the principal plane of a chain link (3) and are attached by means of a bolted connection (12, 13) perpendicular to this plane and running through the link aperture and which each have two side webs (9, 10), which embrace the longitudinal limbs of the link (3) as viewed in its longitudinal direction over at least a part of its periphery, wherein each clamping part (6, 7, 22, 24; 35, 36; 39, 40) has a central web (8) through which a hole (11) for the bolted connection (12, 13) runs, at least one clamping part (6, 7, 22, 24; 35, 36; 39, 40) is provided with a connection means (15, 23, 25, 37, 43, 45) on a side web (10) for the component, which connection means is situated outside the external width (bₐ) of the chain link (3) as viewed perpendicularly to the principal plane (h) of the link and is disposed offset with respect to the central plane (q) of the link, and that limb of a chain link (3) which is situated closer to the connection means is embraced concomitantly, substantially over its entire periphery as viewed in its longitudinal direction, by two side webs (10, 10) of the two clamping parts (6, 7, 22, 24; 35, 36) of a carrier (2), characterised in that at least one connection means (15, 23, 25, 37, 43, 45) is situated symmetrically with respect to the principal plane (h) of the link and contains the latter, and the other limb is embraced by the two other side webs (9, 9) by a maximum of 180°.

2. A carrier arrangement according to claim 1, characterised in that two carriers (2) are provided for each component and chain (1) (Figures 5 and 8).

3. A carrier arrangement according to claim 2, characterised in that each clamping part (22; 35) of each carrier (2) has connection means (23; 37) (Figures 5, 8).

4. A carrier arrangement according to claim 1 or 2, characterised in that the two clamping parts (6, 7; 35, 36) of each carrier (2) are constructed absolutely alike (Figures 1 to 4; 10, 11).

5. A carrier arrangement according to claim 4, characterised in that each clamping part (6, 7; 35, 36) of a carrier (2) has connection means (15, 37) of like construction (Figures 1 to 4; 10, 11).

6. A carrier arrangement according to any one of claims 1 to 5, characterised in that at least one of the clamping parts (6, 7, 22) of a carrier (2) is provided with a connection stud (15, 23), the axis of which runs parallel to the principal plane (h) of the link, preferably within the latter, and perpendicularly to the principal axis of the chain link (3).

7. A carrier arrangement according to claim 6, characterised in that the connection stud (15) is a threaded stud.

8. A carrier arrangement according to claim 6, characterised in that the connection stud (15) is a plain stud which is provided in the region of its free end with a transverse hole (42) to take a split-pin, securing stud or the like (Figure 15a).

9. A carrier arrangement according to any one of claims 1 to 5, characterised in that a connection shackle (37) similar to a flat steel section stands away from at least one clamping part (35, 36) of a carrier (2) parallel to the transverse central plane (q) of the link (3), which connection shackle is provided with a hole (38) running parallel to the principal plane of the link (Figures 10 to 12).

10. A carrier arrangement according to claim 9, characterised in that a connection shackle (37) stands away from each of the two clamping parts (35, 36) of a carrier (2), wherein both shackles (37) are placed at a distance from each other symmetrically with respect to the central plane (q) of the link and their holes (38) align with each other (Figures 10, 11).

11. A carrier arrangement according to any one of claims 1 to 10, characterised in that one of the clamping parts (40) of a carrier (2) is extended outwards into a wear part (41) known in the art which comes into contact with a guide (Figures 13, 14).

12. A carrier arrangement according to any one of claims 1 to 5, or claim 11, characterised in that at least one of the clamping parts (6‴) of a carrier is provided with a connection flange (45) in which a connection hole is formed which runs parallel to the secondary axis of the chain link (Figures 15c, d).

13. A carrier arrangement according to claim 12, characterised in that the connection hole is a tapped hole (Figure 15c).

14. A carrier arrangement according to any one of claims 2, 3, 6 or 7, characterised in that each clamping part (22, 24) of each carrier (2) has a connection stud (23), that a connection plate (25), which is perpendicular to the principal plane (h) of the links (3) provided with the clamping parts, is associated with the two carriers (2), and that the connection plate has the holes (26, 27) associated with the connection studs (23) (Figures 5 to 9).

15. A carrier arrangement according to claim 14, characterised in that one of the holes is formed as a slot (27) extending in the direction of the chain axis (Figure 7).

16. A carrier arrangement according to claim 14 or 15, characterised in that each connection stud (23) is provided with a distance bush (28), the length of which is greater than the thickness of the connection plate, and is provided with a shim washer (30) brought into contact with the distance bush (28) by means of a nut (29) (Figures 5 to 7).

17. A carrier arrangement according to any one of claims 1 to 16, characterised in that the bolted connection of the clamping parts comprises a stud (12) and a nut (13), wherein both the stud head and the nut (13) are countersunk in the corresponding clamping parts (6, 7).

18. A carrier arrangement according to claim 7, characterised in that the stud (12) is an Allen screw.

19. A carrier arrangement according to claim 17, characterised in that the nut is self-locking.

## Revendications

1. Ensemble entraîneur pour la fixation d'un élément de construction, par exemple d'un racloir, d'un godet ou d'un rouleau porteur sur une chaîne en acier rond (1), dans lequel un entraîneur est constitué de deux pièces de serrage (6, 7), qui sont disposées de part et d'autre du plan principal d'un maillon de chaîne (3), sont assemblées au moyen d'un assemblage boulonné (12, 13) s'étendant perpendiculairement à ce plan par l'ouverture du maillon, et présentent chacune deux branches latérales (9, 10) qui entourent les branches longitudinales du maillon (3), vues dans leur direction longitudinale, au moins sur une partie de leur circonférence, chaque pièce de serrage (6, 7 ; 22, 24 ; 35, 36 ; 39, 40) présentant une partie centrale (8) que traverse un perçage (11) pour l'assemblage boulonné (12, 13), au moins une pièce de serrage (6, 7 ; 22, 24 ; 35, 36 ; 39, 40) étant pourvue, sur une branche latérale (10), d'un moyen de raccordement (15, 23, 25, 37, 43, 45) pour l'élément de construction, moyen qui, vu perpendiculairement au plan principal (h) du maillon, se trouve en dehors de la largeur extérieure (bₐ) du maillon de chaîne (3) et est décalé par rapport au plan médian (q) du maillon, et la branche du maillon (3) qui est la plus proche du moyen de raccordement étant, vue dans sa direction longitudinale, conjointement entourée sensiblement sur toute sa circonférence par deux branches latérales (10, 10) des deux pièces de serrage (6, 7 ; 22, 24 ; 35, 36) d'un entraîneur (2),
**caractérisé** en ce que le ou chaque moyen de raccordement (15, 23, 25, 37, 43, 45) est symétrique au plan principal (h) du maillon et contient ce plan, et l'autre branche du maillon est entourée sur au plus 180° par les deux autres branches latérales (9, 9).

2. Ensemble entraîneur selon la revendication 1, **caractérisé** en ce que deux entraîneurs (2) sont prévus pour chaque élément de construction d'une chaîne (1) (figures 5, 8).

3. Ensemble entraîneur selon la revendication 2, **caractérisé** en ce qu'une pièce de serrage respective (22 ; 35) de chaque entraîneur (2) présente un moyen de raccordement (23 ; 37) (figures 5, 8).

4. Ensemble entraîneur selon la revendication 1 ou 2, **caractérisé** en ce que les deux pièces de serrage (6, 7 ; 35, 36) de chaque entraîneur (2) sont réalisées totalement identiques (figures 1 à 4, 10, 11).

5. Ensemble entraîneur selon la revendication 4, **caractérisé** en ce que chaque pièce de serrage (6, 7 ; 35, 36) d'un entraîneur (2) présente un moyen de raccordement identiquement configuré (15, 37) (figures 1 à 4, 10, 11).

6. Ensemble entraîneur selon l'une quelconque des revendications 1 à 5, **caractérisé** en ce qu'au moins une des pièces de serrage (6, 7 ; 22) d'un entraîneur (2) est pourvue d'un goujon de raccordement (15, 23), dont l'axe s'étend parallèlement au plan principal (h) du maillon, de préférence dans ce plan, et perpendiculairement à l'axe principal du maillon de chaîne (3).

7. Ensemble entraîneur selon la revendication 6, **caractérisé** en ce que le goujon de raccordement (15) est un goujon fileté.

8. Ensemble entraîneur selon la revendication 6, **caractérisé** en ce que le goujon de raccordement (15) est un goujon lisse qui est pourvu, dans la région de son extrémité libre, d'un perçage transversal (42) pour recevoir une goupille fendue, une goupille d'arrêt ou similaire (figure 15a).

9. Ensemble entraîneur selon l'une quelconque des revendications 1 à 5, **caractérisé** en ce qu'une patte de raccordement (37) du genre fer plat part en saillie, parallèlement au plan médian transversal (q) du maillon (3), d'au moins une pièce de serrage (35, 36) d'un entraîneur (2), et elle est pourvue d'un perçage (38) s'étendant parallèlement à l'axe principal du maillon (figures 10 à 12).

10. Ensemble entraîneur selon la revendication 9, **caractérisé** en ce qu'une patte de raccordement (37) part en saillie de chacune des deux pièces de serrage (35, 36) d'un entraîneur (2), les deux pattes (37) étant situées à distance l'une de l'autre, symétriquement au plan médian (q) du maillon, et leurs perçages (38) étant mutuellement alignés (figures 10, 11).

11. Ensemble entraîneur selon l'une quelconque des revendications 1 à 10, **caractérisé** en ce qu'une des pièces de serrage (40) d'un entraîneur (2) est prolongée en une pièce d'usure (41) en soi connue, qui vient s'appliquer contre un guide (figures 13, 14).

12. Ensemble entraîneur selon l'une quelconque des revendications 1 à 5 ou 11, **caractérisé** en ce qu'au moins une des pièces de serrage (6‴) d'un entraîneur est pourvue d'une bride de raccordement (45), dans laquelle est configuré un perçage de raccordement s'étendant parallèlement au second axe du maillon de chaîne (figures 15c, d).

13. Ensemble entraîneur selon la revendication 12, **caractérisé** en ce que le perçage de raccordement est un perçage fileté (figure 15c).

14. Ensemble entraîneur selon l'une quelconque des revendications 2, 3, 6 ou 7, **caractérisé** en ce qu'une pièce de serrage respective (22, 24) de chaque entraîneur (2) présente un goujon de raccordement (23), une plaque de raccordement (25), disposée perpendiculairement au plan principal (h) des maillons (3) pourvus des pièces de serrage, est associée aux deux entraîneurs (2), et la plaque de raccordement présente des perçages (26, 27) associés aux goujons de raccordement (23) (figures 5 à 9).

15. Ensemble entraîneur selon la revendication 14, **caractérisé** en ce qu'un des perçages est réalisé sous la forme d'un trou oblong (27) s'étendant dans la direction de l'axe de la chaîne (figure 7).

16. Ensemble entraîneur selon la revendication 14 ou 15, **caractérisé** en ce que chaque goujon de raccordement (23) est pourvu d'une douille d'écartement (28) dont la longueur est supérieure à l'épaisseur de la plaque de raccordement, et d'une rondelle de calage (30) qui, au moyen d'un écrou (29) est amenée en application contre la douille d'écartement (28) (figures 5 à 7).

17. Ensemble entraîneur selon l'une quelconque des revendications 1 à 16, **caractérisé** en ce que l'assemblage boulonné des pièces de serrage comprend une vis de boulon (12) et un écrou (13), tant la tête de vis que l'écrou (13) étant encastrés dans les pièces de serrage correspondantes (6, 7).

18. Ensemble entraîneur selon la revendication 7, **caractérisé** en ce que la vis de boulon (12) est une vis à six pans creux.

19. Ensemble entraîneur selon la revendication 17, **caractérisé** en ce que l'écrou est autobloquant.
